# EUROPEAN PATENT SPECIFICATION

(11) **EP 1 467 954 B1**
(45) Date of publication and mention of the grant of the patent: **17.08.2005**
(21) Application number: 02716668.5
(22) Date of filing: 21.01.2002
(51) Int. Cl.: C03B 19/02, C03B 19/04

(54) **PROCESS FOR DECORATING A HOT GLASS OBJECT WITH MOLTEN GLASS AND OBJECTS OBTAINED WITH SAID PROCESS**
VERFAHREN ZUM DEKORIEREN EINES HEISSEN GLASGEGENSTANDS MIT SCHMELZFLÜSSIGEM GLAS UND DANACH ERHALTENE GEGENSTÄNDE
PROCEDE DE DECORATION D'UN OBJET EN VERRE SOUFFLE AVEC DU VERRE FONDU ET OBJETS OBTENUS SELON CE PROCEDE

(43) Date of publication of application: 20.10.2004
(73) Proprietor: Fm Marcolin AB, 372 22 Ronneby (SE)
(72) Inventor: MARCOLIN, Giuseppe, A-5020 Salzburg (AT)
(74) Representative: Baccaro Mannucci, Luisa
(86) International application number: PCT/EP2002/000543
(87) International publication number: WO 2003/059827

(56) References cited:
- WO-A1-96/18583
- WO-A1-99/26889
- DD-A1- 244 542
- DE-A1- 3 730 869
- US-A- 762 925
- US-A- 4 288 238

## Description

### Technical field

This invention refers to a process for forming a glass or crystal object, comprising a body and a colorless or colored, transparent or opaque glass or crystal glass decoration.

The invention also relates to a decorated glass or crystal glass article of manufacture obtained with this method.

### Background art

EP-B-0781256 describes a process for manufacturing objects made of decorated glass or crystal glass, essentially in which a glass object, formed by means of a first form or mold, is applied - while it is still sufficiently hot to present a certain plasticity - to a second form or mold, which presents a cavity for making the decoration. Subsequently, molten glass is injected into the cavity and flows between the mold and the surface of the object whereby creating the decoration which adheres to the object itself.

This process allows to obtain glass and crystal glass objects also with complex decorations on industrial level. However, the process presents a number of shortcomings, including the following:
- the process is relatively complex, because it requires two molds since the object being manufactured must pass from one mold to the other while it is still plastic. The process is consequently difficult to automate for mass production;
- the injection time and pressure of the decorative glass must be carefully controlled to prevent deforming and spoiling the object which is still plastically deformable.
- the decorative glass adheres to the glass surface of the object progressively as it is injected, whereby reducing the cross-section of the cavity. This problem increases with the distance from the injection point. This considerably limits the extension of the surface of the object which can be decorated and the thinness of the decoration.

In addition to EP-B-0781256, the known process is described in the article "*Crystal artists develop system for decorating hot glass*", published in the June 1999 issue of "Glass" magazine and in the article "*Cutting the cost of decorating glass",* published in the May 2001 issue of "Tableware international" magazine.

### Objects and summary of the invention

The object of the invention is to obtain a process for the hot decoration of glass or crystal glass objects with molten glass which avoids the aforesaid problems and shortcomings and which is simpler, faster and easier to implement.

This and additional objects and advantages, which will be clearly understood by those skilled in the art by reading the following text, are essentially obtained with a process comprising the following steps:
a) providing a mold and a counter mold whose respective opposing surfaces define a cavity corresponding to the decoration to be applied to the object;
b) reciprocally coupling the counter mold and the mold;
c) introducing at least one first gob of molten decorative glass into the cavity and forming a decoration;
d) distancing the counter mold from the mold;
e) introducing in the mold at least one second gob of glass, which is in the moltenstate or preformed to make a semifinished pasty artifact for forming the body of the object which thus adheres to the decoration.

Essentially, the decorative glass is injected between the mold and the counter mold and, being the mold and counter mold made of solid refractory material, such as metal, graphite or other, tends not to adhere to the respective surfaces forming the decorative cavity between the mold and the counter mold.

Furthermore, preferably, the mold and the counter mold are kept at a suitable temperature, preferably lower than 600°C, particularly slightly lower than 500°C, to prevent adhesion of glass.

Preferably, to introduce the gob of decorative glass a variable volume chamber, for example formed by a cavity (preferably cylindrical) in which an injection piston slides, is associated to the mold and/or to the counter mold. The decorative glass gob is introduced in the variable volume chamber, from where it is injected into the cavity between mold and the counter mold.

The decorative glass can be injected in several steps, using different colored gobs, to obtain a multicolor decoration.

In this case, the process can, for example, comprise the following steps:
a) reciprocally coupling said mold and said counter mold, forming a cavity which corresponds to a first portion of the decoration to be applied to the object;
b) introducing said at least one first gob of molten decorative glass into said cavity;
c) removing said counter mold;
d) reciprocally coupling said mold and an additional counter mold, which form an additional cavity corresponding to a part of the decoration which is different from the first portion of the decoration;
e) introducing an additional gob of molten decorative glass in said additional cavity;
f) repeating phases (c), (d) and (e), if required;
g) introducing said at least one second gob of glass for forming the body of the object in said mold.

To obtain an optimal adhesion of the body of the object to the decoration, the second gob of glass is introduced in the mold when the decoration is internally still in pasty state while being cooled sufficiently to externally solidify and obtain a degree of consistency allowing to maintain the shape of the decoration.

In the present description and in the annexed claims, generic reference will be made to a second gob of glass to be introduced in the mold. The expression "gob" in this context generally indicates a certain amount of molten glass in liquid state, or also a glass object in pasty state, semifinished and/or pre-formed, and partially or totally solidified if desired.

This is because the second gob of glass can be introduced (automatically or manually) in the mold in molten state and the mold can be rotated to uniformly stretch and distribute the gob by centrifuge force in the mold, making the molten glass thus adhere to the decoration and generating the decorated object. By suitably dosing the second gob, this process also avoids the need of trimming the free edge of the object after cooling.

However, in a different embodiment of the injection, the second glass gob can be pressed, also automatically, in said mold, possibly using the same counter mold. Alternatively, it can be pre-formed in a semifinished pasty state artifact, blown or solid, which is then introduced and additionally blown or pressed, possibly even in the same mold used to prepare the decoration, thus making it adhere to the decoration itself.

Alternatively, the second gob of molten glass can be introduced in the mold over the previously formed decoration by casting, injection, suction or other equivalent method.

Conveniently, before and/or during adhesion of the decoration on the semifinished object, the mold and/or the surface of the decoration can be briefly heated if the external surface is excessively cool.

Preferably, the first gob of molten decorative glass is deposited in the variable volume chamber at a maximum temperature of approximately 1300°C and the second gob of molten glass - cast, blown or solid - is introduced into the mold at a suitable temperature in the range from approximately 900°C to approximately 1200°C, according to the process used.

The finished and decorated object, particularly if obtained by centrifugation, pressing or casting of the second gob of glass directly in the mold, can be detached and extracted from the mold by means of a mobile injection piston in the variable volume chamber which also forms the means for injecting the first gob of glass from the variable volume chamber into the mold. Alternatively, an automatic suction cap can be used.

If on the other hand, the second gob consists of a semifinished pasty artifact, which was blown by means of a blowing pipe, after final forming with application of the decoration, the object can be extracted from the mold by means of the same blowing pipe to which it is indirectly attached and thus be ready to be detached and annealed.

Alternatively, if the second gob consists of a partially blown semifinished pasty artifact, it can be coated by a new layer of transparent or opaque molten glass before being introduced in the mold so that the colored decoration preventively generated in the mold is inside the surface of the semifinished artifact itself. After this, the semifinished artifact thus decorated can be developed by additional blowing and if required opened in a conventional way to obtain an object in the form of a vase, cup, plate or other with the internal colored decoration visible from the outside and/or the inside of the object. Alternatively, it can be subjected to one or more additional operations to finish the object by means of known finishing processes after which it is annealed.

The mold and/or counter mold for injecting the decoration can be made of several parts, which can be mated, blocked and opened to permit extraction of the counter mold and of the finished decorated object, also with objects presenting mold stripping undercuts and the cavity in the mold and/or in the counter mold can be connected to the external environment by means of breather vents, by means of which a vacuum can be created inside the cavity for facilitating injection of the decoration.

It will be understood from the previous description that the method according to the invention overcomes the shortcomings of the prior art mentioned above. This is because, unlike the process according to the prior art, the decoration is made by means of a cavity consisting of a mold and a counter mold, instead of being injected against the body of the previously formed object. This permits a greater freedom in choosing the type of decoration and, furthermore, avoids the risk of damaging the body of the object due to the injection pressure exerted on the hot, partially plastic body.

The invention also refers to glass objects with a decoration, also made of glass, produced by means of a process as described above.

Such decorated objects can developed three-dimensionally in the form of solid decorative objects, such as sculptures, figurines, blocks, chandeliers, or can be hollow, such as vases, cups, lighting elements or lampshade supports, goblets, bottles, carafes or similar. Alternatively, these objects can be developed to be prevalently flat, such as floor tiles or wall tiles, panels, flat tableware or other.

### Brief description of the drawings

The invention will be better understood by a reading of the following description, reference being made to the accompanying drawing, which shows only a practical non-limiting embodiment of the invention. In the drawing:
Figures 1 and 2 show an axial view and a plan view of a mold and counter mold assembly, respectively, during a first step of the process according to the invention for manufacturing a colorless, transparent glass cup with a colored glass decoration,
Figures 3 and 4 show views similar to Figures 1 and 2 during a second step of the process, and
Figures 5 and 6 show views similar to Figure 1, in a third and fourth step of the process, respectively.

### Detailed description of a preferred embodiment of the invention

The process will now be described with reference to the manufacturing of a glass cup, for example made of colorless, transparent crystal glass, whose shape is hemispherical and hollow, with a colored glass leaf decoration applied on the external surface. It should be understood that this is only one possible example of a plurality of items of various shapes which can be made with the process according to the invention.

A mold 1, supported and blocked on a device suitable for making the mold rotated on its axis, is provided for forming the cup. In the illustrated example, the support is obtained by means of three jaws 3, arranged in plan at 120°, of a self-centering chuck (not shown in the drawing), the chuck rotating on a vertical axis X-X.

The mold 1 presents a hemispherical cavity 1A, corresponding to the external surface of the cup to be manufactured, in which a bas-relief cavity 5, reproducing in the illustrated example a plurality of acanthus leafs developing from the bottom of the hemispherical cavity 1A towards the upper edge of the cavity, is provided. A cylindrical cavity 7 coaxial with axis X-X is made in the bottom of the mold 1 in which a piston 9 is housed. The piston 9 forms a variable volume chamber 7A communicating with the cavity 5 on the bottom of the mold by sliding and rotating in the cylindrical cavity 7.

A counter mold 11 can be inserted in the mold 1. The counter mold 11 presents a hemispherical surface 11A with the same radius and coinciding with surface 1A of the mold 1. The counter mold 11 is rigidly fastenable to the mold 1 by means of a rod 11B and other structural elements (not shown in the drawing), some of said elements being removable or whose position is susceptible of being changed to remove the counter mold 11 from the mold 1 in other steps of the process.

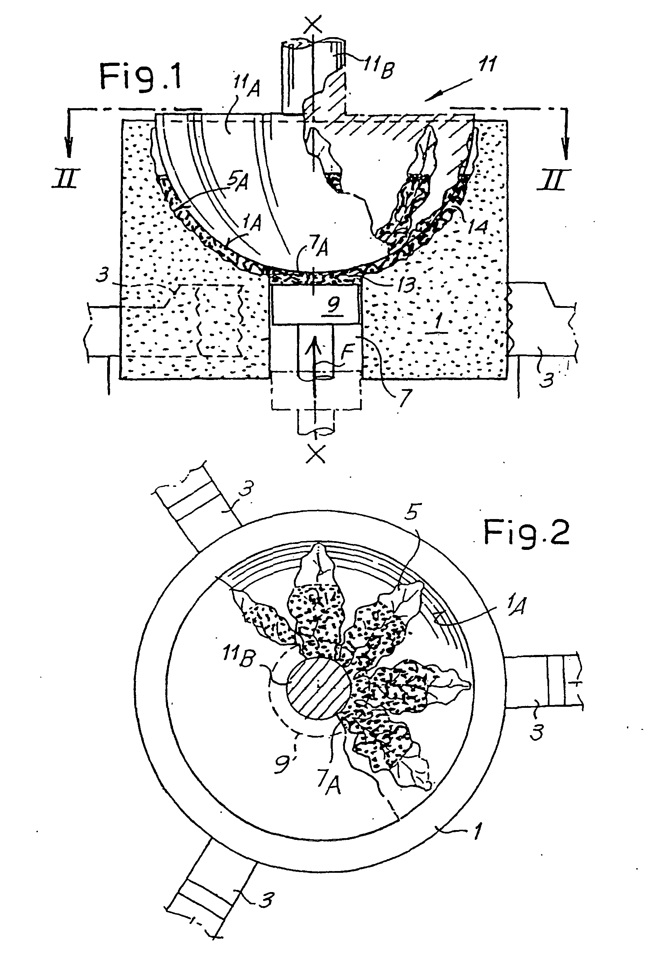

In a first phase of the process (Figures 1 and 2), with the counter mold 11 separated from the mold 1, a first gob of molten colored glass 13 is introduced in the variable volume chamber 7A at a temperature of approximately 1200°C, over the face of the piston 9. Subsequently, the counter mold 11 is applied and blocked inside the mold 1, in the position shown in Figure 1 and the piston 9 is turned and slid in the direction of the arrow F, for example by means of a hydraulic jack (not shown in the drawing) to fill the empty space between the mold 1 and the hemispherical surface 11A of the counter mold 11 with the molten glass gob 13. This empty space consists of the bas-relief cavity 5. In this way, a colored glass decoration 14 to be applied to the cup to be formed in the subsequent phases of the process is formed in a few seconds.

Subsequently, the counter mold is extracted and the decoration 14 thus formed is left to shortly cool externally to a suitable temperature, according to its thickness, comprised in the range from approximately 450°C to approximately 550°C, so to keep its shape stabile also without the counter mold 11 and so that its external surface solidifies while being still partially semi-solid inside.

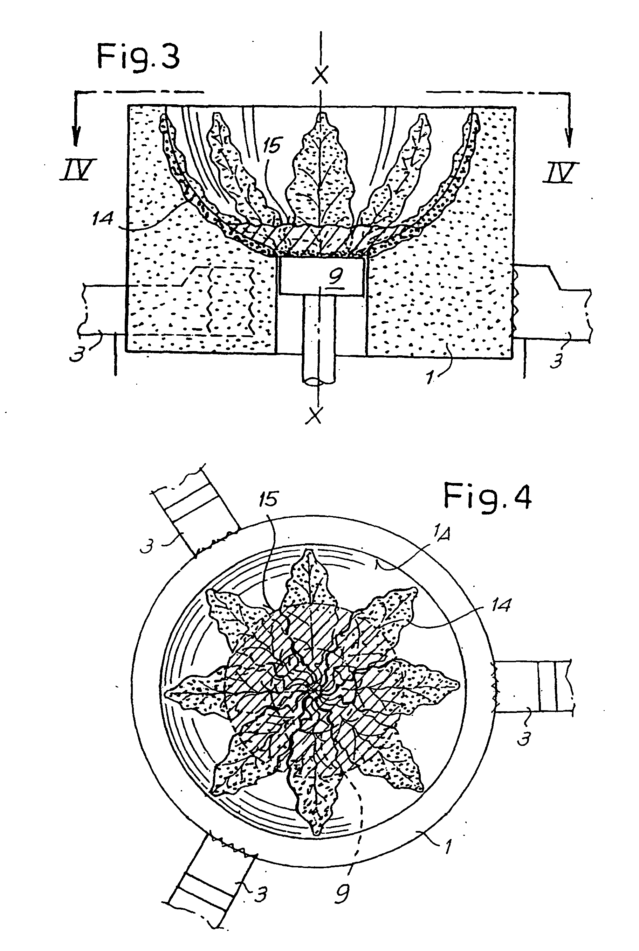

A second gob 15 of colorless molten glass or crystal glass at a temperature of approximately 1200°C is inserted (Figures 3 and 4) and deposited on the bottom of the mold 1 and partially on the decoration 14. During this phase, the mold is rotated at slow speed.

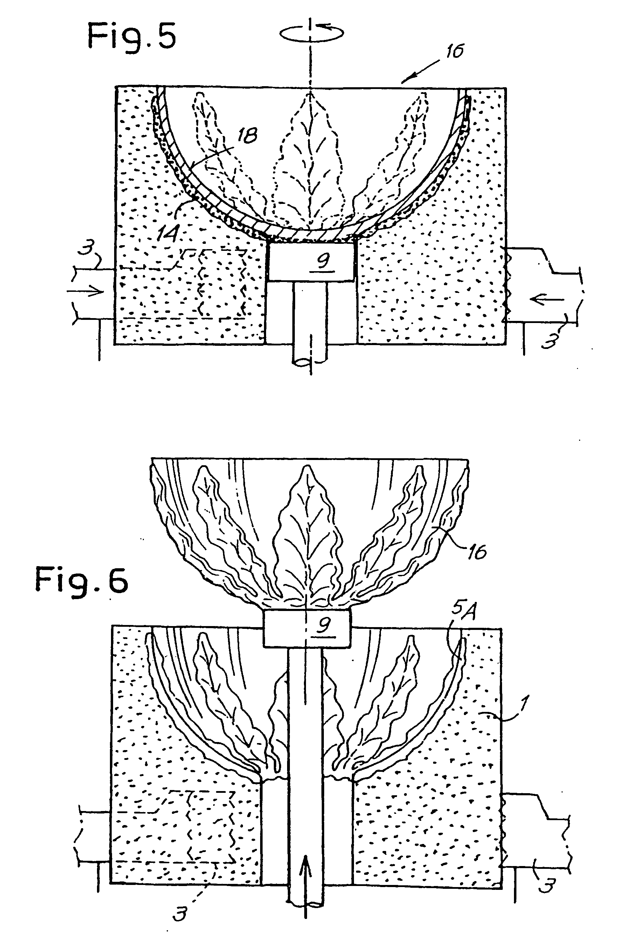

After introducing the second gob of glass or crystal glass 15, the mold 1 is rotated at a faster speed, by accelerating the supporting chuck in its movement around the axis X-X to distribute the colorless crystal glass gob by centrifugal force along the wall 1A of the mold 1 and on the free surface of the decoration 14 (Figure 5).

The rotational movement is maintained until the crystal glass cools, solidifies and adheres to the decoration 14, generating the cup 16, which is formed by a body 18 and by the decoration 14 applied to the external surface of the body 18.

Being formed by centrifugation, the cup thus decorated is presented in finished state and no trimming of the edge is required. Consequently, after solidification of the cup, this is extracted from the mold 1, after opening the mold, if required, by advancing the piston 9 beyond the cavity 7, as shown in Figure 6. Alternatively, the cup is extracted with an automatic suction cup.

As mentioned above, the body of the object can also be made in a different way. For example, after forming the decoration 14 with the process described above, having removed the counter mold 11 and having introduced the second gob of glass or crystal glass in the mold 1, the gob can be distributed to form the body of the object by pressing a suitably contoured counter mold in the mold 1 or by using the same counter mold 11 for this purpose.

In modified embodiments of the process according to the invention, a semifinished solid body, partially or totally formed, can be inserted in the mold 1. Alternatively, a semifinished artifact obtained by blowing and pressing, by injection, by casting, or by any other way can be inserted.

In these cases, the second gob of glass consists of the body, for example made of a semifinished pasty artifact, pre-formed either industrially or manually, instead of a dose of liquid glass or crystal glass. The body of the semifinished artifact can finished, for example, by blowing inside the mold 1 to adhere with its external surface on the surface 1A of the mold 1 and on the free surface of the decoration 14.

It is noted that the drawing is provided by the way of an example only and that numerous changes can be implemented to the construction and embodiments of the invention herein envisaged without departing from the scope of the present invention as defined in the claims.

## Claims

1. A process for forming a glass object comprising a body (18) and a glass decoration (14), **characterized in that** it comprises the following steps:
a) providing a mold (1) and a counter mold (11) whose respective opposing surfaces define a cavity (5) corresponding to the decoration (14) to be applied to the object;
b) reciprocally coupling the counter mold (11) and the mold (1);
c) introducing at least one first gob (13) of molten decorative glass into the cavity (5) and forming a decoration (14);
d) distancing the counter mold (11) from the mold (1);
e) introducing in the mold (1) at least one second gob (15) of glass, which is in the molten state or preformed to make a semifinished pasty artifact, for forming the body (16) of the object which thus adheres to the decoration (14).

2. Process according to claim 1, **characterized in that** the second glass gob is introduced in said mold when the decoration (14) in the cavity (5) is at least externally solidified.

3. Process according claim 1 or 2, **characterized in that** said first decorative glass gob is introduced in a variable volume chamber (7A) in communication with said cavity and is injected from said variable volume chamber into said cavity.

4. Process according to claim 1, 2 or 3, **characterized in that** during the introduction of said at least one first gob (13) of decorative glass (13) into said cavity, the mold and the counter mold are kept at a predetermined temperature to prevent the glass from sticking to the mold and/or the counter mold.

5. Process according to claim 4, **characterized in that** said mold (1) and said counter mold (11) are kept at a temperature lower than 600°C.

6. Process according to claim 4 or 5, **characterized in that** said first gob of decorative glass (13) is introduced at an initial temperature which is higher than 1100°C, preferably in the range from approximately 1200°C to approximately 1300°C.

7. Process according to one or more of the previous claims, **characterized in that** said second gob (15) of glass is introduced in molten state into the mold (1) and said mold is rotated whereby distributing by centrifugal force said second gob of glass (15) in said mold (1) and bringing said second gob of glass into contact with the decoration (14) formed by the first gob of glass.

8. Process according to claim 7, **characterized in that** said mold (1) is rotated while the second gob of glass (15) cools until the solid finished glass object (16) is created.

9. Process according to one or more of claims 1 to 6, **characterized in that** said second gob of glass (15) is introduced in molten state and pressed into said mold, whereby adhering to said decoration (14).

10. Process according to one or more of claims 1 to 6, **characterized in that** said second gob of glass (15) is introduced in molten state in said mold by suction.

11. Process according to one or more of claims 1 to 6, **characterized in that** said second gob of glass (15) is introduced in molten state in said mold by casting.

12. Process according to one or more of claims 1 to 6, **characterized in that** said second gob of glass (15) is introduced in molten state in said mold by injection.

13. Process according to one or more of claims 1 to 6, **characterized in that** said second gob of glass (15) is pre-formed to make a semifinished pasty artifact which is introduced in said mold and made to adhere to the decoration.

14. Process according to claim 13, **characterized in that** said semifinished artifact is made to adhere to said decoration by pressing in said mold (1).

15. Process according to claim 13, **characterized in that** said semifinished artifact is a blown semifinished artifact which is made to adhere to said decoration (14) by means of additional blowing and pressing in said mold.

16. Process according to one or more of the previous claims, **characterized in that** the mold and/or the decoration is heated immediately before and/or during application of the second gob of glass.

17. Process according to one or more of the previous claims, **characterized in that** said second gob (15) of glass is introduced in said mold (1) at a temperature within the range from approximately 900°C and approximately 1200°C.

18. Process according at least to claim 3, **characterized in that** the solidified, finished and decorated object (16) is detached and extracted from the mold (1) by means of a an injection piston (9) mobily fitted in said variable volume chamber (7A).

19. Process according to one or more of the previous claims, **characterized in that** the object (16) is detached and extracted from said mold by means of a suction cap.

20. Process according to claim 9, **characterized in that** said second gob is pre-formed to make a semifinished pasty glass artifact by blowing with a blowing pipe or by means of a full pipe, and that after blowing the object is extracted from the mold by means of said blowing pipe or full pipe to which it is still attached.

21. Process according to one or more of the previous claims, **characterized in that** the mold and/or the counter mold for injecting the decoration consists of several mating and separable parts, to permit the extraction of the counter mold and of the finished object, also in the case of objects presenting mold stripping undercuts.

22. Process according to one or more of the previous claims, **characterized in that** the cavity formed by said mold and said counter mold is connected to the external environment by means of breather vents through which a vacuum may be created inside the cavity to facilitate injection of the decoration.

23. Process according to one or more of the previous claims, **characterized in that** is comprises one or more finishing phases chosen from the group comprising: annealing, trimming the edge, additional blowing, opening, and possible combinations thereof.

24. Process according to one or more of the previous claims, **characterized in that** said decoration is made by injection of a plurality of gobs (13) of molten decorative glass, said gobs presenting reciprocally different characteristics.

25. Process according to claim 24, **characterized in that** said gobs of decorative molten glass have different colors.

26. Process according to claim 24 or 25, **characterized in that** it comprises the following steps:
a) reciprocally coupling said mold and said counter mold, forming a cavity which corresponds to a first portion of the decoration to be applied to the object;
b) introducing said at least one first gob (13) of molten decorative glass into said cavity;
c) removing said counter mold;
d) reciprocally coupling said mold and an additional counter mold, which form an additional cavity corresponding to a part of the decoration which is different from the first portion of the decoration;
e) introducing an additional gob of molten decorative glass in said additional cavity;
f) repeating phases (c), (d) and (e), if required;
g) introducing said at least one second gob of glass for forming the body of the object in said mold.

## Patentansprüche

1. Verfahren zum Herstellen eines Glasgegenstandes mit einem Körper (18) und einer Glasdekoration (14), ***dadurch gekennzeichnet*, dass** das Verfahren die folgenden Schritte aufweist:
a) Vorsehen einer Form (1) und einer Gegenform (11), deren einander gegenüberliegende Oberflächen einen Hohlraum (5) entsprechend bilden der der Dekoration (14), die auf dem Gegenstand aufgebracht werden soll entspricht;
b) gegenteiliges Koppeln der Gegenform (11) und der Form (1);
c) Einbringen von wenigstens einem ersten Glasposten (13) aus geschmolzenem Dekorationsglas in den Hohlraum (5) und Ausbilden einer Dekoration (14);
d) Trennen der Gegenform (11) von der Form (1);
e) Einbringen von wenigstens einem zweiten Glasposten (15) aus geschmolzenem Glas in die Form (1), der in dem geschmolzenem Zustand oder vorgeformt ist, um ein halbfertiges pastoses Teil zu bilden, um den Körper (16) des Gegenstandes herzustellen, der somit an der Dekoration (14) haftet.

2. Verfahren nach Anspruch 1, ***dadurch gekennzeichnet,* dass** der zweite Glasposten in die Form eingebracht wird, wenn die Dekoration (14) in dem Hohlraum (5) wenigstens außen fest geworden ist.

3. Verfahren nach Anspruch 1 oder 2, ***dadurch gekennzeichnet,* dass** der erste dekorative Glasposten in eine Kammer (7A) mit variablem Volumen eingeleitet wird, die mit dem Hohlraum kommuniziert, und aus der Kammer mit variablem Volumen in den Hohlraum eingespritzt wird.

4. Verfahren nach Anspruch 1, 2 oder 3, ***dadurch gekennzeichnet,* dass** während dem Einbringen des wenigstens einen ersten Glaspostens (13) aus dekorativem Glas (13) in den Hohlraum die Form und die Gegenform auf einer vorbestimmten Temperatur gehalten sind, um zu verhindern, dass das Glas an der Form und/oder der Gegenform anhaftet.

5. Verfahren nach Anspruch 4, ***dadurch gekennzeichnet,* dass** die Form (1) und die Gegenform (11) auf einer Temperatur unter 600 °C gehalten werden.

6. Verfahren nach Anspruch 4 oder 5, ***dadurch gekennzeichnet,* dass** der erste Glasposten aus dekorativem Glas (13) mit einer Ausgangstemperatur, die höher als 1000 °C, vorzugsweise im Bereich von ungefähr 1200 °C bis ungefähr 1300 °C, ist, eingeleitet wird.

7. Verfahren nach einem der vorstehenden Ansprüche, ***dadurch gekennzeichnet,* dass** der zweite Glasposten (15) aus Glas im geschmolzenen Zustand in die Form (1) eingeleitet wird, und dass die Form gedreht wird, wodurch der zweite Glasposten (15) in der Form (1) durch Zentrifugalkraft verteilt wird und der zweite Glasposten mit der Dekoration (14), die von dem ersten Glasposten gebildet worden ist, in Berührung gebracht wird.

8. Verfahren nach Anspruch 7, ***dadurch gekennzeichnet,* dass** die Form (1) während des Abkühlens des zweiten Glaspostens (15) gedreht wird, bis der fest gewordene fertige Glasgegenstand (16) erzeugt ist.

9. Verfahren nach einem oder mehreren der Ansprüche 1 bis 6, ***dadurch gekennzeichnet*, dass** der zweite Glasposten (15) in geschmolzenem Zustand eingebracht wird und in die Form gepresst wird, wodurch er an der Dekoration (14) anhaftet.

10. Verfahren nach einem oder mehreren der Ansprüche 1 bis 6, ***dadurch gekennzeichnet,* dass** der zweite Glasposten (15) in geschmolzenem Zustand durch Saugkraft in die Form eingebracht wird.

11. Verfahren nach einem oder mehreren der Ansprüche 1 bis 6, ***dadurch gekennzeichnet,* dass** der zweite Glasposten (15) in geschmolzenem Zustand durch Gießen in die Form eingebracht wird.

12. Verfahren nach einem oder mehreren der Ansprüche 1 bis 6, ***dadurch gekennzeichnet*, dass** der zweite Glasposten (15) in geschmolzenem Zustand durch Einspritzen in die Form eingebracht wird.

13. Verfahren nach einem oder mehreren der Ansprüche 1 bis 6, ***dadurch gekennzeichnet,* dass** der zweite Glasposten (15) vorgeformt wird, um ein halbfertiges pastoses Teil zu schaffen, das in die Form eingesetzt wird und bewirkt wird, dass es an der Dekoration haftet.

14. Verfahren nach Anspruch 13, ***dadurch gekennzeichnet,* dass** das halbfertige Teil durch Pressen in die Form (1) an der Dekoration zum Anhaften gebracht wird.

15. Verfahren nach Anspruch 13, ***dadurch gekennzeichnet*, dass** das halbfertige Teil ein geblasenes halbfertiges Teil ist, das an der Dekoration (14) mittels zusätzlichem Blasen und Pressen in die Form zum Anhaften gebracht wird.

16. Verfahren nach einem oder mehreren der vorstehenden Ansprüche, ***dadurch gekennzeichnet,* dass** die Form und/oder die Dekoration unmittelbar vor und/oder während dem Anbringen des zweiten Glaspostens erhitzt wird.

17. Verfahren nach einem oder mehreren der vorstehenden Ansprüche, ***dadurch gekennzeichnet*, dass** der zweite Glasposten (15) in die Form (1) mit einer Temperatur im Bereich von ungefähr 900 °C bis ungefähr 1200 °C eingebracht wird.

18. Verfahren wenigstens nach Anspruch 3, ***dadurch gekennzeichnet,* dass** der fest gewordene, fertig gestellte und dekorierte Gegenstand (16) mittels eines Spritzkolbens (9), der mobil in der Kammer (7A) mit variablem Volumen befestigt ist, von der Form (1) gelöst und aus ihr herausgeführt wird.

19. Verfahren nach einem oder mehreren der vorstehenden Ansprüche, ***dadurch gekennzeichnet*, dass** der Gegenstand (16) mittels einer Saugkappe von der Form gelöst und aus ihr herausgenommen wird.

20. Verfahren nach Anspruch 9, ***dadurch gekennzeichnet,* dass** der zweite Glasposten durch Blasen mit einem Blasrohr oder mittels eines Vollrohres vorgeformt wird, um einen halbfertigen, pastosen Glaskörper zu bilden, und dass nach dem Blasen der Gegenstand aus der Form mittels des Blasrohres oder des Vollrohres, an dem er immer noch anhaftet, herausgenommen wird.

21. Verfahren nach einem oder mehreren der vorstehenden Ansprüche, ***dadurch gekennzeichnet*, dass** die Form und/oder die Gegenform zum Einspritzen der Dekoration aus mehreren passenden und trennbaren Teilen bestehen, um zu ermöglichen, dass die Gegenform und der fertige Gegenstand auch dann herausgenommen werden können, wenn der Gegenstand Entformungs-Hinterschneidungen aufweist.

22. Verfahren nach einem oder mehreren der vorstehenden Ansprüche, ***dadurch gekennzeichnet*, dass** der Hohlraum, der durch die Form und die Gegenform gebildet ist, mit der Außenumgebung mittels Entlüftungsrohren verbunden ist, durch die im Inneren des Hohlraums ein Vakuum erzeugt werden kann, um das Einspritzen der Dekoration zu erleichtern.

23. Verfahren nach einem oder mehreren der vorstehenden Ansprüche, ***dadurch gekennzeichnet,* dass** das Verfahren eine oder mehrere Nachbehandlungsphasen aufweist, die ausgewählt sind aus der Gruppe, die besteht aus: Tempern, Beschneiden der Kante, zusätzliches Blasen, Öffnen, und mögliche Kombinationen derselben.

24. Verfahren nach einem oder mehreren der vorstehenden Ansprüche, ***dadurch gekennzeichnet*, dass** die Dekoration durch Einspritzen einer Anzahl von Glasposten (13) aus geschmolzenem, dekorativem Glas hergestellt ist, wobei die Glasposten voneinander unterschiedliche Eigenschaften aufweisen.

25. Verfahren nach Anspruch 24, ***dadurch gekennzeichnet,* dass** die Glasposten aus dekorativem, geschmolzenem Glas unterschiedliche Farben haben.

26. Verfahren nach Anspruch 24 oder 25, ***dadurch gekennzeichnet,* dass** es die folgenden Schritte aufweist:
a) Gegenseitiges Koppeln der Form und der Gegenform, Ausbilden eines Hohlraums, der einem ersten Teil der Dekoration entspricht, die auf dem Gegenstand aufzubringen ist;
b) Einbringen des wenigstens ersten Glaspostens (13) aus geschmolzenem, dekorativem Glas in den Hohlraum;
c) Entfernen der Gegenform;
d) gegenseitiges Koppeln von Form und einer zusätzlichen Gegenform, die einen zusätzlichen Hohlraum entsprechend einem Teil der Dekoration bildet, der sich von dem ersten Teil der Dekoration unterscheidet;
e) Einbringen eines zusätzlichen Glaspostens aus geschmolzenem, dekorativem Glas in den zusätzlichen Hohlraum;
f) Wiederholen der Phasen (c), (d) und (e), falls erforderlich;
g) Einbringen von wenigstens einem zweiten Glasposten zum Ausbilden des Körpers des Gegenstandes in der Form.

## Revendications

1. Procédé de formage d'un objet en verre comprenant un corps (18) et une décoration en verre (14), **caractérisé en ce qu'**il comprend les étapes suivantes :
a) la fourniture d'un moule (1) et d'un contre-moule (11) dont les surfaces opposées respectives définissent une cavité (5) correspondant à la décoration (14) à appliquer à l'objet ;
b) l'accouplement réciproque du contre-moule (11) et du moule (1) ;
c) l'introduction d'au moins une première paraison (13) de verre décoratif fondu dans la cavité (5) et la formation d'une décoration (14) ;
d) le détachement du contre-moule (11) du moule (1) ;
e) l'introduction dans le moule (1) d'au moins une seconde paraison (15) de verre, qui est à l'état fondu ou préformé pour fabriquer un ouvrage de pâte semi-fini permettant de former le corps (16) de l'objet qui ainsi adhère à la décoration (14).

2. Procédé selon la revendication 1, **caractérisé en ce que** la seconde paraison de verre est introduite dans ledit moule quand la décoration (14) dans la cavité (5) est solidifiée au moins à l'exiérieur.

3. Procédé selon la revendication 1 ou 2, **caractérisé en ce que** ladite première paraison de verre décorative est introduite dans une chambre à volume variable (7A) en communication avec ladite cavité et est injectée depuis ladite chambre à volume variable dans ladite cavité.

4. Procédé selon la revendication 1, 2 ou 3, **caractérisé en ce que**, au cours de l'introduction de ladite au moins une première paraison (13) de verre décoratif (13) dans ladite cavité, le moule et le contre-moule sont maintenus à une température prédéterminée pour éviter que le verre ne colle au moule et/ou au contre-moule.

5. Procédé selon la revendication 4, **caractérisé en ce que** ledit moule (1) et ledit contre-moule (11) sont maintenus à une température inférieure à 600°C.

6. Procédé selon la revendication 4 ou 5, **caractérisé en ce que** ladite première paraison de verre décoratif (13) est introduite à une température initiale qui est supérieure à 1 100°C, de préférence dans la plage allant d'environ 1200°C à environ 1300°C.

7. Procédé selon l'une ou plusieurs des revendications précédentes, **caractérisé en ce que** ladite seconde paraison (15) de verre est introduite à l'état fondu dans le moule (1) et ledit moule se met à tourner, répartissant ainsi par force centrifuge ladite seconde paraison de verre (15) dans ledit moule (1) et amenant ladite seconde paraison de verre en contact avec la décoration (14) formée par la première paraison de verre.

8. Procédé selon la revendication 7, **caractérisé en ce que** ledit moule (1) est mis en rotation pendant que la seconde paraison de verre (15) refroidit jusqu'à ce que l'objet en verre solide fini (16) soit produit.

9. Procédé selon l'une ou plusieurs des revendications 1 à 6, **caractérisé en ce que** ladite seconde paraison de verre (15) est introduite à l'état fondu et pressée dans ledit moule, adhérant ainsi à ladite décoration (14).

10. Procédé selon l'une ou plusieurs des revendications 1 à 6, **caractérisé en ce que** ladite seconde paraison de verre (15) est introduite à l'état fondu dans ledit moule par succion.

11. Procédé selon l'une ou plusieurs des revendications 1 à 6, **caractérisé en ce que** ladite seconde paraison de verre (15) est introduite à l'état fondu dans ledit moule par coulée.

12. Procédé selon l'une ou plusieurs des revendications 1 à 6, **caractérisé en ce que** ladite seconde paraison de verre (15) est introduite à l'état fondu dans ledit moule par injection.

13. Procédé selon l'une ou plusieurs des revendications 1 à 6, **caractérisé en ce que** ladite seconde paraison de verre (15) est préformée pour fabriquer un ouvrage de pâte semi-fini, qui est introduit dans ledit moule et fabriqué de manière à adhérer à la décoration.

14. Procédé selon la revendication 13, **caractérisé en ce que** ledit ouvrage semi-fini est fabriqué pour adhérer à ladite décoration par pression dans ledit moule (1).

15. Procédé selon la revendication 13, **caractérisé en ce que** ledit ouvrage semi-fini est un ouvrage semi-fini soufflé qui est fabriqué pour adhérer à ladite décoration (14) au moyen d'un soufflage et d'une pression additionnels dans ledit moule.

16. Procédé selon l'une ou plusieurs des revendications précédentes, **caractérisé en ce que** le moule et/ou la décoration est chauffé(e) immédiatement avant et/ou au cours de l'application de la seconde paraison de verre.

17. Procédé selon l'une ou plusieurs des revendications précédentes, **caractérisé en ce que** ladite seconde paraison de verre (15) est introduite dans ledit moule (1) à une température située entre environ 900°C et environ 1200°C.

18. Procédé selon au moins la revendication 3, **caractérisé en ce que** l'objet solidifié, fini et décoré (16) est détaché et extrait du moule (1) par un piston à injection (9) adapté de manière mobile dans ladite chambre à volume variable (7A).

19. Procédé selon l'une ou plusieurs des revendications précédentes, **caractérisé en ce que** l'objet (16) est détaché et extrait dudit moule par un embout de succion.

20. Procédé selon la revendication 9, **caractérisé en ce que** ladite seconde paraison est préformée pour faire un ouvrage de pâte en verre semi-fini par soufflage avec une canne de soufflage ou grâce à une canne pleine, et que, après le soufflage, l'objet est extrait du moule grâce à ladite canne de soufflage ou canne pleine à laquelle il est encore fixé.

21. Procédé selon l'une ou plusieurs des revendications précédentes, **caractérisé en ce que** le moule et/ou le contre-moule pour l'injection de la décoration se compose de plusieurs parties se raccordant et détachables, pour permettre l'extraction du contre-moule et de l'objet fini, également dans le cas d'objets présentant des creux de démoulage.

22. Procédé selon l'une ou plusieurs des revendications précédentes, **caractérisé en ce que** la cavité formée par ledit moule ou ledit contre-moule est reliée à l'environnement extérieur au moyen d'évents d'aération par le biais desquels un vide peut être créé à l'intérieur de la cavité pour faciliter l'injection de la décoration.

23. Procédé selon l'une ou plusieurs des revendications précédentes, **caractérisé en ce qu'**il comprend une ou plusieurs phases de finition choisies dans le groupe comprenant : le recuit, l'affinage des arêtes, le soufflage additionnel, l'ouverture et des combinaisons possibles de ceux-ci.

24. Procédé selon l'une ou plusieurs des revendications précédentes, **caractérisé en ce que** ladite décoration est fabriquée par injection d'une pluralité de paraisons (13) de verre décoratif fondu, lesdites paraisons présentant réciproquement différentes caractéristiques.

25. Procédé selon la revendication 24, **caractérisé en ce que** lesdites paraisons de verre fondu décoratif ont différentes couleurs.

26. Procédé selon la revendication 24 ou 25, **caractérisé en ce qu'**il comprend les étapes suivantes :
a) l'accouplement réciproque dudit moule et dudit contre-moule, formant une cavité qui correspond à une première portion de la décoration à appliquer à l'objet ;
b) l'introduction de ladite au moins une première paraison (13) de verre décoratif fondu dans ladite cavité ;
c) l'élimination dudit contre-moule ;
d) l'accouplement réciproque dudit moule et d'un contre-moule additionnel, qui forment une cavité additionnelle correspondant à une partie de la décoration qui est différente de la première portion de la décoration ;
e) l'introduction d'une paraison additionnelle de verre décoratif fondu dans ladite cavité additionnelle ;
f) la répétition des phases (c), (d) et (e), si nécessaire ;
g) l'introduction de ladite au moins une seconde paraison de verre pour former le corps de l'objet dans ledit moule.
